# EUROPÄISCHE PATENTSCHRIFT

(11) **EP 0 408 498 B1**
(45) Veröffentlichungstag und Bekanntmachung des Hinweises auf die Patenterteilung: **14.09.1994**
(21) Anmeldenummer: 90810501.8
(22) Anmeldetag: 04.07.1990
(51) Int. Cl.: C09B 67/48, C09B 67/02, C09B 67/54, C08K 7/00, C08K 13/04, C09D 5/28

(54) **Plättchenförmige organische Effektpigmente**
Plate like organic effect pigments
Pigments à effets organiques en paillettes

(30) Priorität: 13.07.1989 CH 2630/89
(43) Veröffentlichungstag der Anmeldung: 16.01.1991
(73) Patentinhaber: CIBA-GEIGY AG, 4002 Basel (CH)
(72) Erfinder: Bugnon, Philippe, Dr., CH-1724 Essert (CH); Herren, Fritz, Dr., CH-3186 Düdingen (CH); Medinger, Bernhard, Dr., CH-1735 Giffers (CH)

(56) Entgegenhaltungen:
- CH-A- 142 746
- US-A- 4 370 270
- PATENT ABSTRACTS OF JAPAN, unexamined applications, C Field, Band 6, Nr. 127,13. Juli 1982 THE PATENT OFFICE JAPANESE GOVERNMENT Seite 44 C 113

## Beschreibung

Die vorliegende Erfindung betrifft plättchenförmige organische Pigmente bestimmter Pigmentklassen und ihre Verwendung zur Erzielung von Effektfärbungen.

Es ist in Fachkreisen allgemein bekannt und in der einschlägigen Literatur vielfach festgehalten, dass die Teilchengrösse eines Pigments unter einer bestimmten Grenze liegen muss, damit das Pigment den koloristischen Anforderungen genügen kann. Die übliche Teilchengrösse liegt bei etwa 0,1 bis 1,0 µm (vgl. z.B. Ullmanns Encyclopädie der technischen Chemie, Band 13, S. 742, 3. Auflage, 1962). Es ist allerdings auch bekannt, dass die sogenannten Effektpigmente bzw. Glanzpigmente aus grösseren, flächig ausgebildeten Partikeln bestehen. Ursprünglich wurde der Perlglanz mit natürlichem Fischsilber, d.h. mit Guanin-Dispersionen, die aus Fischschuppen gewonnen werden können, erzeugt. Heutzutage bestehen die Effektpigmente im allgemeinen aus anorganischen flächigen Partikeln, die gegebenenfalls mit farbigen Oxidschichten überzogen werden (vgl. beispielsweise K.Dorfner, E. Merck, "Pearl Lustre Pigments'', Speciality Chemicals 2 und 3, Februar und Mai 1982). Diese genügen aber nicht immer den heutigen koloristischen Anförderungen. Im US-Patent 4,370,270 ist als bisher einzige Ausnahme ein organisches plättchenförmiges Pigment als Effektpigment beschrieben. Es handelt sich dabei um ein Kupferphthalocyanin der β-Modifikation, das bei der Synthese in Plättchen von mindestens 10 µm Länge und 3 µm Breite anfällt und, in Einbrennlacken eingearbeitet, Metalleffektfärbungen ergibt.

Es ist nun gefunden worden, dass von Verbindungen bestimmter anderer organischer Pigmentklassen überraschenderweise ebenfalls eine zur Erzielung von Effektfärbungen geeignete Plättchenform erhalten werden kann, wenn man sie einer Rekristallisation in Lösungsmitteln, in denen sie bis zu einem gewissen Grad löslich sind, unterwirft.

Die vorliegende Erfindung betrifft demnach organische Pigmente ausgewählt aus der Diketopyrrolopyrrol-, Azo-, Isoindolinon- und Isoindolinreihe, dadurch gekennzeichnet, dass sie zu mindestens 50 Gew.% aus Plättchen bestehen, die zwischen 5 und 50 µm lang, 2 und 50 µm breit und 0,01 und 5 µm dick sind, wobei die Verhältnisse Länge:Dicke und Breite:Dicke mindestens 3, bevorzugt mindestens 5, sein müssen.

Bevorzugt bestehen die Pigmente zu mindestens 70 Gew.% aus Plättchen der obenerwähnten Grössenordnung.

Bevorzugte Pigmente in der erfindungsgemässen Plättchenform sind 1,4-Diketopyrrolo-[3,4-c]-pyrrolpigmente, insbesondere das 1,4-Diketo-3,6-diphenyl-pyrrolo-[3,4-c]-pyrrol.

Die erfindungsgemässen plättchenförmigen Pigmente erhält man aus den Rohpigmenten oder den entsprechenden Pigmentformen durch Rekristallisation in einem organischen Lösungsmittel oder Lösungsmittelgemisch, gegebenenfalls mit Wasser, in welchem 0,05 bis 10 Gew.%, bevorzugt 0,1 bis 5 Gew.% des Pigments unter Rekristallisationsbedingungen, d.h. im allgemeinen bei Temperaturen zwischen 50°C und dem Siedepunkt oder auch über dem Siedepunkt des Lösungsmittels bei erhöhtem Druck, löslich sind, gegebenenfalls in Gegenwart löslichkeitsverbessernder Mittel, wie z.B. organischer oder insbesondere anorganischer Basen, wie beispielsweise Natronlauge, Kalilauge oder Pyridin, oder auch Säuren, beispielsweise Schwefelsäure.

Geeignete Lösungsmittel sind z.B. aromatische Lösungsmittel, wie Toluol, Xylol, o-Dichlorbenzol, Nitrobenzol und insbesondere aprotische polare Lösungsmittel, wie Dimethylformamid, N-Methylpyrrolidon, Hexamethylphosphortriamid, Sulfolan, Dimethylsulfoxid und Dimethylsulfon, oder Gemische davon.

Zweckmässig werden 1 bis 20, bevorzugt 3 bis 15 Gew.% Pigment, bezogen auf das Lösungsmittel oder Lösungsmittelgemisch, während mindestens 30 Minuten, unter vorsichtigem Rühren im Lösungsmittel(gemisch) rekristallisiert. Die Dauer des Rekristallisationsvorganges hängt von der gewünschten Plättchengrösse ab.

Bei den Pigmenten, die durch das soeben beschriebene Rekristallisationsverfahren die erfindungsgemässen plättchenförmigen Pigmente liefern, handelt es sich um in Fachkreisen allgemein bekannte Pigmente.

Die erfindungsgemässen plättchenförmigen Pigmente eignen sich ausgezeichnet zur Erzielung von Effektfärbungen, wie z.B. Perl- oder Metallglanzeffekten, in hochmolekularem organischem Material und in kosmetischen Produkten, wobei sie allein oder zusammen mit anderen organischen oder anorganischen, opaken oder transparenten Pigmenten und/oder mit anderen Effektpigmenten verwendet weden können. Sie ermöglichen die Herstellung koloristisch neuartiger, bisher nicht einstellbarer Effektfärbungen, welche ausgezeichnete Beständigkeiten aufweisen.

Hochmolekulare organische Materialien, die mit den erfindungsgemässen plättchenförmigen Pigmenten zur Erzielung von Effektfärbungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisations- oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen.

Bevorzugt werden die erfindungsgemässen plättchenförmigen Pigmente in Lacken, insbesondere in Automobillacken, in 1-,2- oder 3-Schichtsystemen eingesetzt. Besonders bevorzugt verwendet man sie in 2- und 3-Schichtsystemen, wie sie heutzutage für die Metallic-Lackierungen verwendet werden, z.B. Basislacke aus Polyester/Melamin oder Acrylat/Melamin, die mit Acrylat/Melamin-Klarlacken überspritzt werden. Hierbei können statt der üblichen lösungsmittelhaltigen Basislacke auch solche auf Basis von Wasser als Lösungsmittel angewendet werden. Weitere geeignete Bindemittel sind z.B. Alkydharze (luft- und ofentrocknend) sowie 2-K-Lacke aus OH-haltigen Polyestern oder Acrylaten und Isocyanaten. Beim Einsatz in 3-Schichtsystemen kann die unterste Schicht auch opake organische oder anorganische Pigmente enthalten. In solchen Systemen können die erfindungsgemässen plättchenförmigen Pigmente in Analogie zu den in den US-PS 4,539,258 und 4,598,020 beschriebenen Methoden verwendet werden. Ansonsten werden in allen oben erwähnten Anwendungsgebieten die dort üblichen Hilfsmittel, wie Weichmacher, Wachse, usw. verwendet.

Die Pigmentierung der Lacke, Druckfarben, Kunststoffmassen usw. mit den erfindungsgemässen Pigmenten erfolgt zweckmässig durch vorsichtiges Einrühren und Verteilen der plättchenförmigen Pigmente in den entsprechenden Medien mittels Dissolvern, Schnellrührem oder ähnlichen Geräten. Ein intensives Dispergieren oder Anreiben mit Kugeln oder anderen Dispergierkörpern ist zu vermeiden, da sonst die Gefahr besteht, dass die Plättchen bei diesen Prozessen zerstört werden und die koloristischen Effekte verloren gehen.

Bezogen auf das zu pigmentierende hochmolekulare organische Material kann man die erfindungsgemässen plättchenförmigen Pigmente in einer Menge von 0,01 bis 30 Gew.%, vorzugsweise von 0,1 bis 10 Gew.% einsetzen.

Kosmetische Produkte, die mit den erfindungsgemässen plättchenförmigen Pigmenten zur Erzielung von Effektfärbungen gefärbt bzw. pigmentiert werden können, sind z.B. Augen-Make-up-Produkte, wie Kompaktpuder, Lidschattenemulsionen, Mascara-Produkte und insbesondere Nagellacke. Bezogen auf das zu pigmentierende kosmetische Produkt werden die erfindungsgemässen plättchenförmigen Pigmente zweckmässig in einer Menge von 0,5 bis 2 Gew.% eingesetzt.

Die folgenden Beispiele erläutern die Erfindung:

Beispiel 1:1 g 1,4-Diketo-3,6-diphenyl-pyrrolo-[3,4-c]-pyrrol wird in 50 ml N-Methylpyrrolidon während 6 Stunden unter vorsichtigem Rühren bei 180°C rekristallisiert, wobei bereits nach einer Stunde in der Suspension die Bildung feiner Plättchen beobachtet werden kann. Danach wird die Suspension abgekühlt, filtriert, nacheinander mit N-Methylpyrrolidon, Ethanol und Wasser gewaschen und im Vakuumtrockenschrank getrocknet.

Man erhält ein rotes Pigment in Plättchenform, wobei mindestens 50 % der Plättchen eine Länge von 5 bis 50 µm, eine Breite von 2 bis 50 µm, und eine Dicke von 0,1 bis 5 µm aufweisen.

Beispiel 2: 20 g 1,4-Diketo-3,6-diphenyl-pyrrolo-[3,4-c]-pyrrol werden in 600 ml Dimethylformamid 4 Stunden unter vorsichtigem Rühren bei 150°C rekristallisiert. Die Suspension wird danach abgekühlt, Filtriert, nacheinander mit Dimethylformamid und Wasser gewaschen und im Vakuumtrockenschrank getrocknet. Man erhält ein rotes Pigment in Plättchenform, wobei mindestens 70 % der Plättchen eine Länge von 10 bis 50 µm, eine Breite von 3 bis 30 µm und eine Dicke von 0,1 bis 4 µm aufweisen.

Beispiel 3: 4 g des Azopigments CI Pigment Yellow 154 werden in 100 ml Dimethylformamid während 4 Stunden bei 110°C rekristallisiert. Danach wird die Suspension abgekühlt, filtriert, nacheinander mit Dimethylformamid und Wasser gewaschen und im Vakuumtrockenschrank getrocknet. Man erhält ein gelbes Pigment bestehend aus Plättchen.

Beispiel 4: 2 g des Azopigments CI Pigment Yellow 74 werden in 100 ml Dimethylformamid während 2 Stunden bei 60°C rekristallisiert. Danach wird die Suspension abgekühlt, filtriert, nacheinander mit Dimethylformamid und Wasser gewaschen und im Vakuumtrockenschrank getrocknet. Man erhält ein gelbes Pigment bestehend aus Plättchen.

Beispiel 5: 2 g 1,4-Diketo-3,6-bis-(4-Chlorphenyl)-pyrrolo-[3,4-c]-pyrrol werden in 100 ml N-Methylpyrrolidon während 24 Stunden unter vorsichtigem Rühren bei 120°C rekristallisiert. Danach wird die Suspension bis 50°C abgekühlt, 150 g Wasser werden zugegeben. Die Suspension wird einige Minuten gerührt, abgekühlt, filtriert, mit Wasser gewaschen und im Vakuumtrockenschrank getrocknet. Man erhält ein rotes Pigment bestehend aus Plättchen.

Beispiel 6: 2 g 1,4-Diketo3,6-bis-(4-methylphenyl)-pyrrolo-[3,4-c]-pyrrol werden in 100 ml Dimethylformamid während 23 Stunden bei 180°C rekristallisiert. Danach wird die Suspension abgekühlt, filtriert, nacheinander mit 50 ml Dimethylformamid, 50 ml Isopropanol und danach mit viel Wasser gewaschen und im Vakuumtrockenschrank getrocknet. Man erhält ein rotes Pigment bestehend aus Plättchen.

Beispiel 7: 6 g eines orangen Isoindolinpigmentes der Formel 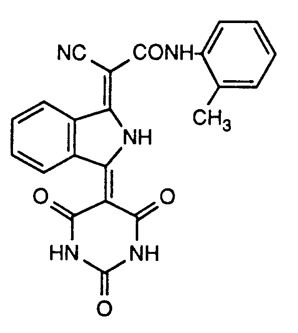
(Beispiel 51 von US Patent 4 262 120) werden in 100 ml Dimethylformamid in Anwesenheit von 0.22 g einer 30%igen Lösung NaOH während 19 Stunden bei 180°C rekristallisiert. Man erhält ein oranges Pigment bestehend aus Plättchen.

Beispiel 8: 15 g 1,4-Diketo-3,6-diphenyl-pyrrolo-[3,4-c]-pyrrol werden in 100 ml Dimethylformamid während 4 Stunden unter vorsichtigem Rühren bei 150°C rekristallisiert. Danach wird die Suspension bis 50°C abgekühlt, bevor 150 g Wasser zugegeben werden. Die Suspension wird einige Minuten gerührt, abgekühlt, filtriert, mit Wasser gewaschen und im Vakuumtrockenschrank getrocknet. Man erhält ein rotes plättchenförmiges Pigment.

Beispiel 9: 2 g eines orangen Isoindolinpigmentes gemäss Beispiel 7 werden in 100 ml o-Dichlorbenzol in Anwesenheit von 0,2 g einer 30%igen NaOH-Lösung während 24 Stunden bei 175°C rekristallisiert. Die Suspension wird danach abgekühlt, filtriert, nacheinander mit Methanol und Wasser gewaschen und im Vakuumtrockenschrank getrocknet. Man erhält ein oranges Pigment in Plättchenform, wobei mindestens 50 % der Plättchen eine Länge von 2 bis 20 µm, eine Breite von 2 bis 12 µm und eine Dicke von 0,1 bis 1 µm aufweisen.

Beispiel 10: 32 g des gemäss Beispiel 2 erhaltenen Pigments werden während einer Stunde mit einem Zahnscheibenrührer bei 200 U/Min. in eine 8,2%ige Lösung von 86 g Celluloseacetobutyrat (25%ig in Butylacetat), 4 g Zirkoniumoctoat, 48 g Solvesso 150® (aromatisches Lösungsmittel), 70 g Butylacetat und 52 g Xylol eingerührt.

Anschliessend werden 96 g Polyesterharz Dynapol H700® (60%ig) und 12 g Melaminharz Maprenal MF650® (55%ig) aufgelackt und mit der Spritzpistole appliziert. Nach kurzem Ablüften wird ein Klarlack auf Basis eines hitzehärtbaren Acryllacks appliziert und bei 130°C während 30 Minuten eingebrannt. Man erhält eine rote Lackierung mit einem markanten metallic-ähnlichen Effekt.

Beispiel 11: 500 mg des gemäss Beispiel 2 erhaltenen Pigments werden während 30 Minuten mit einem Zahscheibenrührer bei 250 U/min in 15 g eines Nagellacks bestehend aus 71,7 g Alkydharz, Alkydal F681®, 21,7 g Sangajol (Benzinfraktion 140-190°C), 1,08 g Bindemittel Exkin 2®, 1,08 g Silikonöl A® (1%ig in Xylol) und 4,36 g Trockenstofflösung auf Basis von Co-, Pb- und Ca-Naphthenaten (6,4 g Co-Soligen 8 %, 37,2 g Pb-Soligen 24 % und 56,4 g Ca-Soligen 4 %) eingerührt. Die Lackanreibung wird mit einem automatischen Coater auf Mylar PR-Film® (200 µm Nassfilmdicke) appliziert. Nach Trocknung erhält man eine rote Lackierung mit deutlichem Perlglanzeffekt.

Beispiel 12: 200 mg des gemäss Beispiel 2 erhaltenen Pigments werden mit 13,3 g Polyvinylchlorid und 7,3 g Dioctylphthalat vermischt und auf dem Walzenstuhl während 5 Minuten bei 145°C zu einer dünnen Folie verarbeitet. Die so erzeugte Färbung zeigt einen deutlich metallic-ähnlichen Effekt.

## Patentansprüche

1. Organische Pigmente ausgewählt aus der Diketopyrrolopyrrol-, Azo-, Isoindolinon- und Isoindolinreihe, dadurch gekennzeichnet, dass sie zu mindestens 50 Gew.% aus Plättchen bestehen, die zwischen 5 und 50 µm lang, 2 und 50 µm breit und 0,01 und 5 µm dick sind, wobei die Verhältnisse Länge:Dicke und Breite:Dicke mindestens 3 sein müssen.

2. Organische Pigmente gemäss Anspruch 1, dadurch gekennzeichnet, dass die Verhältnisse Länge:Dicke und Breite:Dicke mindestens 5 sein müssen.

3. Organisches Pigment gemäss Anspruch 1, dadurch gekennzeichnet, dass es sich um ein 1,4-Diketopyrrolo-[3,4-c]-pyrrolpigment handelt.

4. Organisches Pigment gemäss Anspruch 1, dadurch gekennzeichnet, dass es sich um 1,4-Diketo-3,6-diphenyl-pyrrolo-[3,4-c]-pyrrol handelt.

5. Verfahren zur Erzielung von Effektfärbungen in hochmolekularem organischem Material und in kosmetischen Produkten durch Verwendung von organischen Pigmenten gemäss Anspruch 1.

6. Verfahren gemäss Anspruch 5, dadurch gekennzeichnet, dass zusätzlich andere organische oder anorganische, opake oder transparente Pigmente und/oder andere Effektpigmente eingesetzt werden.

7. Verfahren gemäss Anspruch 5 zur Erzielung von Effektfärbungen in Lacken.

8. Verfahren gemäss Anspruch 5 zur Erzielung von Effektfärbungen in Automobillacken.

9. Hochmolekulares organisches Material enthaltend organische Pigmente gemäss Anspruch 1.

10. Kosmetische Produkte enthaltend organische Pigmente gemäss Anspruch 1.

11. Verfahren zur Herstellung von organischen Pigmenten gemäss Anspruch 1 durch Rekristallisation der Rohpigmente oder der entsprechenden Pigmentformen in einem organischen Lösungsmittel oder Lösungsmittelgemisch mit oder ohne Wasser, in welchem 0,05 bis 10 Gew.% des Pigments unter Rekristallisationsbedingungen löslich sind, gegebenenfalls in Gegenwart eines löslichkeitsverbessernden Mittels.

## Claims

1. An organic pigment selected from the diketopyrrolopyrrole, azo, isoindolinone and isoindoline series, which pigment consists of at least 50 % by weight of platelets which are from 5 to 50 µm long, 2 to 50 µm wide and 0.01 to 5 µm thick, with the proviso that the ratios of length: thickness and width: thickness must be at least 3.

2. An organic pigment according to claim 1, wherein the ratios of length: thickness and width: thickness must be at least 5.

3. An organic pigment according to claim 1 which is a 1,4-diketo-pyrrolo[3,4-c]pyrrole pigment.

4. An organic pigment according to claim 1 which is a 1,4-diketo-3,6-diphenylpyrrolo[3,4-c]pyrrole.

5. A process for producing effect colourations in high molecular weight organic material and in cosmetic products, which comprises the use of an organic pigment according to claim 1.

6. A process according to claim 5, which comprises the additional use of other organic or inorganic, opaque or transparent pigments and/or other effect pigments.

7. A process according to claim 5 for producing effect colourations in lacquers.

8. A process according to claim 5 for producing effect colourations in automotive lacquers.

9. A high molecular weight organic material containing an organic pigment as claimed in claim 1.

10. A cosmetic product containing an organic pigment according to claim 1.

11. A process for the preparation of an organic pigment according to claim 1 by recrystallizing the crude pigment or the corresponding pigment form in an organic solvent or mixture of solvents, with or without water, in which 0.05 to 10% by weight of the pigment is soluble under the conditions of recrystallization, in the absence or presence of a solubilizer.

## Revendications

1. Pigments organiques choisis dans la série des dicétopyrrolopyrroles, des azoïques, des isoindolinones et des isoindolines, caractérisés en ce qu'il sont constitués, à raison d'au moins 50% en masse, de plaquettes qui ont une longueur comprise entre 5 et 50 µm, une largeur comprise entre 2 et 50 µm et une épaisseur comprise entre 0,01 et 5 µm, les rapports de la longueur à l'épaisseur et de la largeur à l'épaisseur devant être d'au moins 3.

2. Pigments organiques selon la revendication 1, caractérisés en ce que les rapports de la longueur à l'épaisseur et de la largeur à l'épaisseur doivent être d'au moins 5.

3. Pigment organique selon la revendication 1, caractérisé en ce qu'il s'agit d'un pigment de type 1,4-dicétopyrrolo[3,4-c]pyrrole.

4. Pigment organique selon la revendication 1, caractérisé en ce qu'il s'agit du 1,4-dicéto-3,6-diphénylpyrrolo[3,4-c]pyrrole.

5. Procédé d'obtention de colorations à effets dans une matière organique macromoléculaire et dans des produits cosmétiques dans lequel on utilise des pigments organiques selon la revendication 1.

6. Procédé selon la revendication 5, caractérisé en ce que l'on utilise en outre d'autres pigments organiques ou inorganiques, opaques ou transparents, et/ou d'autres pigments à effets.

7. Procédé selon la revendication 5, pour l'obtention de colorations à effets dans des vernis.

8. Procédé selon la revendication 5, pour l'obtention de colorations à effets dans des peintures pour automobiles.

9. Matière organique macromoléculaire contenant des pigments organiques selon la revendication 1.

10. Produits cosmétiques contenant des pigments organiques selon la revendication 1.

11. Procédé de préparation de pigments organiques selon la revendication 1 par recristallisation des pigments bruts ou de formes de pigments convenables dans un solvant organique ou un mélange de solvants organiques avec ou sans eau, dans lequel sont solubles 0,05 à 10 % en masse du pigment dans les conditions de la recristallisation, éventuellement en présence d'un agent améliorant la solubilité.
